Europäisches Patentamt

European Patent Office

Office européen des brevets

(11) Publication number: **0 170 649**
**B1**

(12) **EUROPEAN PATENT SPECIFICATION**

(45) Date of publication of patent specification: **27.09.89**

(21) Application number: **84900923.8**

(22) Date of filing: **27.01.84**

(86) International application number:
**PCT/US84/00114**

(87) International publication number:
**WO 85/03330 01.08.85 Gazette 85/17**

(51) Int. Cl.⁴: **F 02 M 31/00**

(54) **FUEL SYSTEM FOR INTERNAL COMBUSTION ENGINES.**

(43) Date of publication of application:
**12.02.86 Bulletin 86/07**

(45) Publication of the grant of the patent:
**27.09.89 Bulletin 89/39**

(84) Designated Contracting States:
**BE CH DE FR GB LI NL SE**

(56) References cited:
**WO-A-79/00053**
**DE-C- 473 369**
**FR-A- 612 067**
**FR-A- 750 867**
**FR-A- 889 166**
**FR-B- 840 643**
**GB-A-2 120 724**
**US-A- 860 522**
**US-A-1 980 496**
**US-A-2 732 835**
**US-A-3 167 059**
**US-A-4 151 821**
**US-A-4 178 897**

(73) Proprietor: **ONICS, INC.**
**Maull and Maull 12 East Market Street**
**Georgetown, DE 19947 (US)**

(72) Inventor: **TALBERT, William, L.**
**355 Folkstone Way**
**York, PA 17402 (US)**

(74) Representative: **Klunker . Schmitt-Nilson .**
**Hirsch**
**Winzererstrasse 106**
**D-8000 München 40 (DE)**

Courier Press, Leamington Spa, England.

## Description

The invention generally relates to a system for providing improved fuel in a more efficient manner to an internal combustion engine. More specifically, the invention involves the field of technology relating to hydrocarbon fuel treatment or modification systems that are utilized in conjunction with internal combustion engines, particularly those associated with vehicles.

Internal combustion engines are generally fueled by hydrocarbon fuel sources, such as kerosene, gasoline and the like. In particular, the current use of gasoline by such engines does involve many engineering considerations if the problems attendant the use of this fuel are to be minimized. In addition to suoh considerations, there is also the realization that the world oil supply is substantially finite, thereby imposing increased financial and source material constraints as the demand for gasoline increases with the passing years.

Current internal combustion engines fueled by gasoline are generally inefficient and produce various emissions or products of combustion which have harmful effects on the general environment. Moreover, such engines operate at rather high temperatures which often cause breakdowns of lubricating oils, degradation of sparkplugs, valves and other engine components, and production of undesirable carbonaceous deposits on the engine working surfaces which reduce engine life and increase maintenance costs.

A given volume of gasoline is substantially comprised of two-thirds by volume of lighter fractions which, as a gas, are paraffinic in nature a one-third by volume heavier fractions which are oily in nature. During the operation of a vehicle engine, gasoline droplets mixed with air from the carburetor are introduced into the heated intake manifold and respective hot combustion chambers wherein there occurs a separation of lighter fractions from the heavier fractions and also some conversion of the hydrocarbons into various petrochemical products due to the liquid phase oxidation of the hydrocarbons. The combustion of the air and the lighter hydrocarbon fractions is inhibited by the presence of the heavier hydrocarbon fractions, trace petrochemicals and certain gasoline additives present. This situation encumbers ignition of lean fuel mixtures having higher than stoichiometric air-to-fuel ratios. Moreover, such mixtures are slow burning and require ignition before the engine reaches top dead center, particularly in short stroke engines, thereby reducing engine efficiency. The efficiency of an engine is further reduced by creating rich fuel mixtures having lower than stoichiometric air-to-fuel ratios by normal operational procedures, such as choking, idling and accelerating.

When gasoline undergoes combustion in an engine, a rich fuel mixture having a lower than stoichiometric air-to-fuel ratio generally yields carbon monoxide, unburned hydrocarbons and causes the engine to operate at a fairly high temperature. A stoichiometric fuel mixture having an ideal air-to-fuel ratio (US—A—4,151,821) will generally yield nitrous oxides and produce an excessively hot engine. However, an engine that is operated with a lean fuel mixture having a higher than stoichiometric air-to-fuel ratio produces a minimum of harmful emissions or products of combustion. This latter situation permits the engine to operate at the coolest possible temperature in very high air-to-fuel ratios. In order to realize this desirable objective, it has been recognized that a lean fuel mixture cannot be utilized unless the fuel itself is more volatile than gasoline so that ignition can readily occur at high air-to-fuel ratios. With such a volatile fuel, substantially complete combustion is achieved, with a minimum production of undesirable products of combustion. Correspondingly lower engine operating temperatures are realized, as well as increased fuel efficiency. The lighter hydrocarbon fractions in gasoline are characteristic of such volatile fuels.

Said US—A—4,151,821 discloses the vaporisation of all fuel except for some impurities.

The prior art has recognized that the lighter fractions of hydrocarbon fuels, particularly gasoline, do provide enhanced operating characteristics when utilized for the initial starting of internal combustion engines, particularly in cold weather. This is due to the high volatility of the lighter fractions which, during engine start-up, permit faster engine starting due to more rapid vaporization of such volatile fuel in the induction system of the engine. It has also been recognized that such fuels serve to reduce cold start exhaust emissions when compared to the use of regular fuel, such as gasoline. The prior art practice has been limited to the use of the lighter fractions of gasoline, generally referred to as dry gas, as a specialized fuel limited only for engine starting. It has been maintained that the continued use of such a high volatility fuel in the engine after engine warm-up is not practical due to economic considerations, with the use of regular gasoline in a conventional fuel system being preferred for continued engine operation. Accordingly, it has heretofore been necessary to incorporate dual fuel systems wherein the high volatile fractions are utilized only for engine start-up and a conventional fuel is used for the continued operation of the engine. It has further been proposed to utilize only one source of starting fuel in conjunction with the operation of an engine wherein the fuel source is treated to extract lighter fractions therefrom for providing engine starting fuel.

The problem underlying the present invention is to provide a method for operating an internal combustion engine utilizing a liquid hydrocarbon fuel which is suitable for maximizing the efficency of the fuel consumption and minimizing the production of poluting products of combustion. A further problem underlying the present invention is to provide a fuel system for utilizing a liquid hydrocarbon fuel for said operating method.

In accordance with the present invention, these problems are solved by the method defined in claim 1 and the fuel system defined in claim 11.

According to the invention, only a specified portion of the fuel is utilized for carburation while storing and isolating the unused portion from the original fuel.

Control means are provided for assuring that the proper air-to-fuel ratio is maintained for the operation of the engine in accordance with engine demand such as imposed thereon by a driver of a vehicle through accelerator actuation, throttle or speed control setting.

Initial starting of the engine may be achieved through either the direct injection of fuel vapor or the fogging of unfractionated fuel into the carburetor. A safety valve is provided for assuring vehicle safety against potential hazards imposed by the utilization of fuel vapor for the continuous or regular operation of the engine according to the invention.

Further objects, features and attributes of the present invention will become apparent from the following description and appended claims, reference being to the accompanying drawings forming a part of the specification wherein like reference characters designate corresponding parts of the several views.

Brief Description of the Drawings

FIGURE 1 is a schematic view of the present invention as utilized in conjunction with the internal combustion engine of a vehicle;

FIGURE 2 is a view taken along the line 2—2 of FIGURE 1;

FIGURE 3 is a fragmentary perspective view of one embodiment of the fuel separator device utilized in the invention for separating the fuel into light vapor fractions and heavy liquid fractions;

FIGURE 4 is a schematic view of one embodiment of the fuel metering device utilized in the system of the invention;

FIGURE 5 is a partial sectional view of a second embodiment of the fuel metering device utilized in the system of the ivention;

FIGURE 6 is a view taken along the line 6—6 of FIGURE 5; and

FIGURE 7 is a schematic view of a second embodiment of the fuel separator device utilized in the system of the invention.

Detailed Description of the Preferred Embodiments

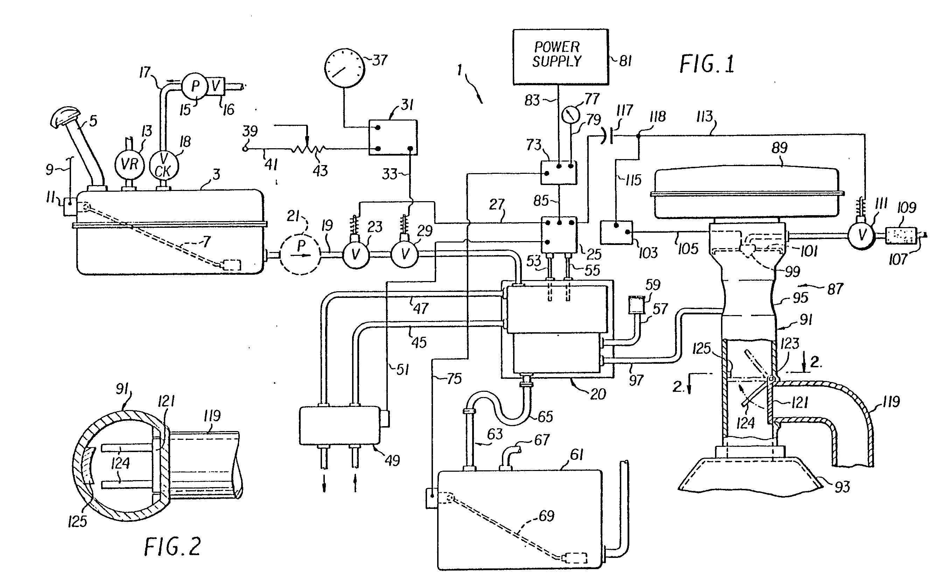

A fuel system 1 according to the invention is schematically depicted in FIG. 1. A first container 3 for storing a source of hydrocarbon fuel includes a spout 5 through which fuel may be added to container 3. A float indicator 7 may be disposed within container 3 for indicating fuel level therein and providing this information to a gauge (not shown) through a line 9 that transmits a signal generated by an indicator source 11, the latter being well known in the art and generally utilized in conjunction with fuel tanks of motor vehicles. In this regard, container 3 may form the fuel tank of a motor vehicle, with spout 5 being the intake conduit through which appropriate fuel derived from a service station may be added. Container 3 further includes a relief valve 13 to provide venting capability for the interior of container 3. A pump 15 having an associated valve 16 disposed upstream thereof may be provided to inject air through a conduit 17 into container 3 for the purpose of pressurizing the fuel contained therein above atmospheric pressure to prevent vaporization of any volatile hydrocarbon fuel fractions. A check valve 18 may be disposed in conduit 17 to control pressurization.

Fuel from container 3 is directed through a conduit 19 to a separator 20. A pump 21 may be disposed in conduit 19 for directing fuel therethrough as an alternative to providing pump 15 for pressurizing the interior of container 3. A first solenoid valve 23 is disposed in conduit 19 downstream from pump 21 and is actuated by a thermostatic control unit 25 through a line 27. A second solenoid valve 29 is disposed downstream of valve 23 for actuation by an electronic fuel metering unit 31 through a line 33. Unit 31 receives signal indication of the speed of the internal combustion engine (not shown), with which engine system 1 is associated through a line 35 that is connected to a tachometer 37. Load or operator demand on the engine and imposed at point 39 is transmitted as a signal to unit 31 through a line 41 having a potentiometer 43, or other such similar device, disposed therein.

Separator 20 is operated off of the heat supplied by exhaust manifold gases created during the operation of the engine. These gases are supplied to separator 20 through an intake conduit 45 and an output conduit 47. The regulation of exhaust gas supply to separator 20 is effected by a control valve 49 that is electrically actuated by control unit 25 through a line 51. A pair of thermal sensors 53 and 55 are disposed within separator 20, thereby permitting control unit 25 to monitor temperature conditions in separator 20. An air vent 57 having an associated filter 59 provides separator 20 with atmospheric air to enhance fluid flow conditions therein. The heavy liquid fuel fractions derived by separator 20 are drained into a second container 61 through a drain conduit 63, preferably including a curved trap section 65 disposed therein. Container 61 is also provided with a conduit 67 for venting the interior of container 61 to the atmosphere. As in the case of first container 3, second container 61 also includes a float indicator 69 for the purpose of ascertaining fluid level therein, with the signal provided thereby being sensed by an indicator unit and transmitted to a switching unit 73 through a line 75. A gauge 77 may be connected to unit 73 through a line 79 for the purpose of providing a visual indication of the fluid level in container 61.

A main power supply 81, such as a battery or other similar source of current, is directly connected to switching unit 73 through a line 83, with unit 73 being directly connected to unit 25 through a line 85.

A carburetor 87 is shown to include an air intake filter 89 and a throat 91 disposed in fluid communication with an intake manifold 93 of the internal combustion engine. Throat 91 includes a venturi portion 95 within which vaporized fuel is received from separator 20 through an intake conduit 97. Throat 91 further includes a fogging nozzle 99 supported by a bracket 101 for the purpose of producing and injecting a spray of very fine fuel droplets through throat 91 and into intake manifold 93 during starting of the engine. Nozzle 99 may be provided with an internal ultrasonic vaporization unit (not shown) for assisting in producing an ultrafine fuel fog. Power for operating the ultrasonic unit is derived from a secondary power supply 103, with such power being transmitted through a line 105. Fuel supply for nozzle 99 is provided through a conduit 107 that receives fuel from first container 3. A fuel filter 109 may be disposed in conduit 107. A solenoid valve 111 is also disposed in conduit 107 between filter 109 and nozzle 99 for controlling fuel flow therethrough. Actuation of valve 111 is effected by control unit 25 through a line 113. Power supply 103 is in electrical connection with line 113 through a line 115. A capacitor 117 is disposed between control unit 25 and the connection between lines 113 and 115, as generally indicated at 118.

Referring now to FIG. 2 in conjunction with that portion of FIG. 1 from which it is derived, it is seen that throat 91 of carburetor 87 is provided with a misfire vent 119 extending laterally away therefrom for directing misfire products of combustion into the atmosphere. A closure plate 121 is pivotally carried by throat 91, as indicated at 123, for the purpose of sealing off vent 119 from the interior of throat 91. Plate 121 includes a pair of impact members 124 disposed at an angle from the upper edge of plate 121 and extending across the longitudinal path of throat 91 when plate 121 is in its position of sealing off vent 119. Members 123 are rigidly associated with plate 121 and pivot in conjunction therewith. An abutment 125 is provided on the interior wall of throat 91 to limit the upward pivoting movement of plate 121 to a position at which the plane of plate 121 is perpendicular to the longitudinal axis of throat 91, as seen in FIG. 1. Referring to FIG. 2, members 124 terminate short of abutment 125 and hence do not make contact with same during the pivoting of plate 121. It is of course desirable that the planar configuration of plate 121 not only serves to completely seal off vent 119, but also conform substantially to the cross-sectional configuration of throat 91 to thereby seal off the passageway defined thereby when plate 121 is pivoted against abutment 125.

When plate 121 seals off vent 119 and a misfire occurs, the back pressure created by the products of combustion are sent up through throat 91, thereby contacting impact members 124. This causes members 124 to pivot upwardly, with such movement imparting corresponding movement to plate 121 and causing the latter to contact abutment 125 and seal off further fluid passage up through throat 91. When plate 121 seals off vent 119, members 124 are contacted by the carbureted mixture of fuel and air and serve to further agitate and homogenize same prior to its injection into intake manifold 93.

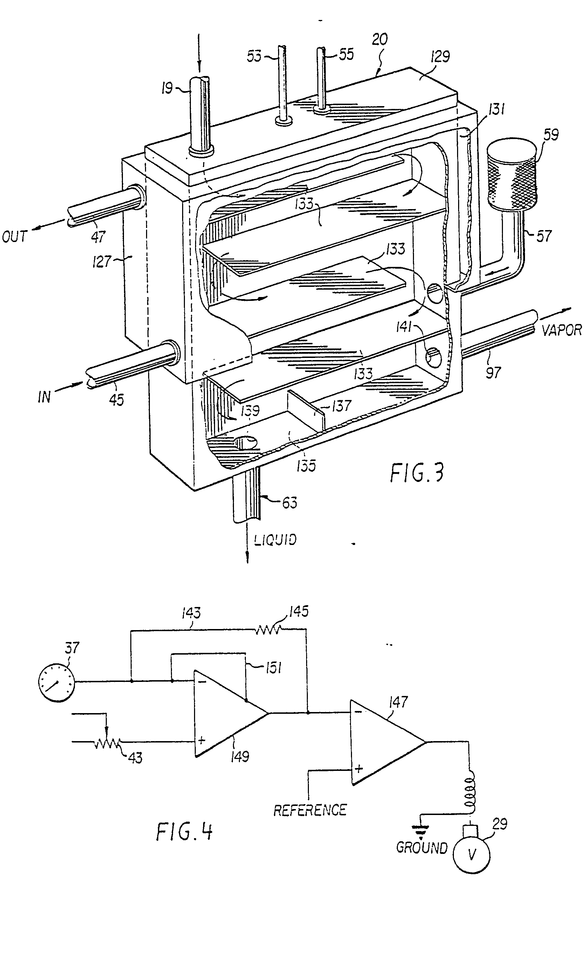

The structural details of separator 20 shall now be described with reference to FIG. 3. Separator 20 includes a hollow jacket 127 that surrounds an inner casing 129 to define an annular chamber 131 therebetween. Hot fluids from the exhaust manifold of the engine are directed into chamber 131 through intake conduit 45 and exit chamber 131 through output conduit 47 for return to the engine exhaust system. Chamber 131 is separate and isolated from the interior of casing 129. Fuel entering casing 129 through conduit 19 is caused to travel through a labyrinth formed from a plurality of spaced shelves 133 secured to the internal walls of casing 129. During its travel, the fuel is heated by exhaust fluids passing through chamber 131, thus causing the lighter or paraffinic fractions of the fuel to vaporize and separate from the heavier or oily liquid fractions. A small amount of filtered air received through vent 57 enhances flow of the fuel over shelves 133 after its fractionation. When the fractionated fuel has reached the end of casing 129, as defined by a wall 135, the heavier liquid fractions impinge against a weir 137 supported on wall 135 and is directed thereby through a drain opening 139 provided in wall 135 and through conduit 63 for ultimate storage in second container 61. The lighter vapor fractions rise and travel over weir 137 and pass through exit opening 141 formed in casing 129 and through conduit 97 for injection into venturi 95 of carburetor 87. Dual heat sensors 53 and 55 provide a constant monitoring of the temperature within casing 129 and relay their signals to control unit 25. It is preferable that at least a pair of sensors 53 and 55 are utilized as a precautionary measure against the failure of a single sensor.

A schematic representation of the basic components included in electronic fuel metering unit 31 is shown in FIG. 4. As earlier indicated, engine speed is monitored by tachometer 37 and engine demand, such as imposed by an operator of a motor vehicle, is intermittently and variably expressed through potentiometer 43. Because of the high volatility of the vapor fuel derived from separator 20, the engine is efficiently operated at any given steady state on a lean or higher than stoichiometric air-to-fuel ratio. This is maintained through a lean circuit 143 provided with a resistor 145 disposed therein. During steady state operation, the signal path is only through circuit 143 to a summing amplifier 147 which in turn activates solenoid valve 29, the latter being variable in operation and provides the desired degree of fuel metering through conduit 19 in accordance with variations in both engine speed and operator demand. In the event of an increase in operator demand as expressed through potentiometer 43, a difference in the signals imposed by engine speed and engine demand immediately occurs, which difference is reflected in current supplied by potentiometer 43 to an output transconductance amplifier 149. This difference is amplified through an enrichment fuel circuit 151, with the outputs from the lean circuit and enrichment fuel circuit being passed to and added together by amplifier 147. The resultant signal then causes valve 29 to meter fuel flow through conduit 19 in direct proportion to the fuel requirement. The additional fuel requirement imposed by operator demand and reflected through enrichment fuel circuit 151 always maintains a higher than stoichiometric air-to-fuel ratio, although during intermittent moments of increased operator demand, the ratio does approach closer to stoichiometric conditions than when the engine is operating under any given steady state condition.

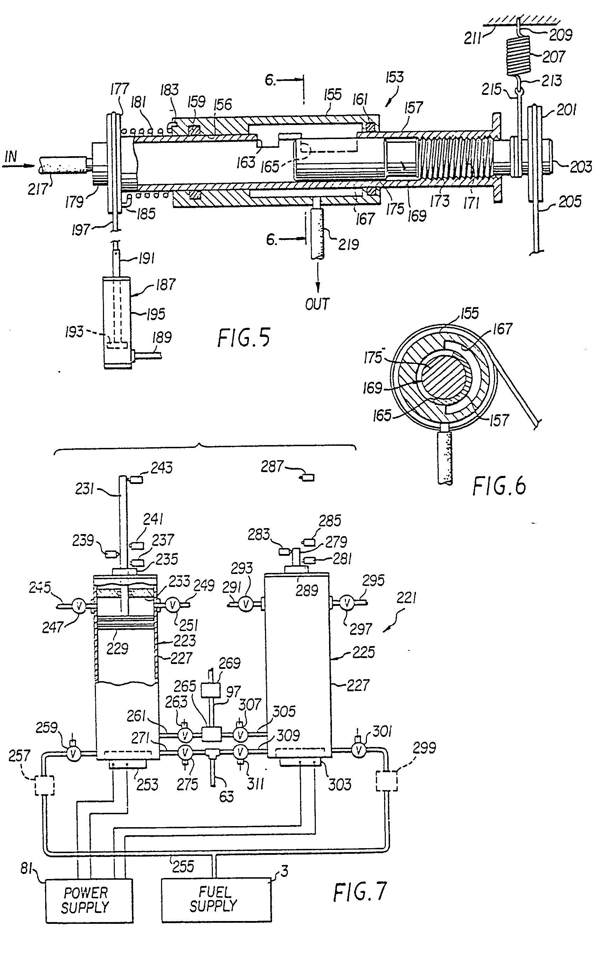

An alternative embodiment of a fuel metering unit which can be utilized in system 1 of the present invention is shown in FIG. 5. In this embodiment, metering unit 153 may be substituted for previously described electronic metering unit 31 and, moreover, comprises a mechanical analog thereof. Unit 153 includes a fixed casing 155 provided with a bore 156 within which a tubular valve member 157 is rotatably journaled. Valve member 157 is of a cylindrical configuration and is sealed within casing 155 by a pair of gaskets 159 and 161, in the form of O-rings or the like. Valve member 157 is provided with a first slot 163 which extends approximately 180° around the wall thereof. Spaced from slot 163 is a second slot 165 having a greater width than slot 163 and also extending approximately 180° around the wall of valve member 157. As more clearly indicated in FIG. 6, casing 155 is provided with a substantially semicylindrical cavity 167 which communicates with the interior of valve member 157 through slots 163 and 165, the degree of communication being dependent upon the rotational position of valve member 157 with respect to bore 156.

A plug 169 is secured within valve member 157 through a male threaded portion 171 which engages a corresponding female threaded portion 173 provided in the interior wall of valve member 157. Plug 169 includes an enlarged closure head 175 having a diameter corresponding substantially to the internal diameter of valve member 157 and a length that exceeds the width of second slot 165. Thus, by screwing or unscrewing plug 169 within valve 157, closure head 175 permits varying the degree of communication between the interior of valve member 157 and cavity 167 through second slot 165. This variation in degree of communication is in addition to that afforded by the rotational positioning of valve member 157 within bore 156. It is of course recognized that the direction of corresponding threads 171 and 173 determines whether plug 169 is advanced into or retracted from valve member 157 during the rotation of plug 169 in a given direction, be it clockwise or counterclockwise.

Rotation of valve member 157 in correlation to engine speed may be achieved through a first pulley wheel 177 mounted on an axle 179 carried by the end of valve member 157 corresponding to first slot 163. A coil spring 181 having a first end 183 secured within casing 155 and a second end 185 secured in pulley 177 provides a counter rotative force to pulley 177 so that the latter is always restored to its original position after it has been rotated. Rotation of pulley wheel 177 is accomplished through a fluid cylinder assembly 187 which receives vacuum pressure through line 189 from the intake manifold 93 of the engine or other such source of pressure providing a corresponding indication of engine speed. A piston rod 191 having an associated piston 193 is disposed for reciprocating movement within a cylinder 195. The free end of rod 191 is connected to a flexible belt 197 or the like, which belt 197 is in turn secured around pulley wheel 177. As is apparent, actuation of fluid motor 187 causes a corresponding rotative displacement of valve member 157 with respect to casing 155. Subsequent deactivation of motor 187 causes spring 181 to restore valve member 157 to its original position with respect to casing 155.

Rotation of plug 169 is accomplished through a second pulley wheel 201 mounted on a free end 203 of plug 169. Rotation of pulley wheel 201 is effected by a flexible belt 205 that engages wheel 201 and is actuated in accordance with operator demand on the engine. In those circumstances where the engine is utilized in a vehicle, belt 205 may be mechanically linked to either the throttle or accelerator linkage. A coil spring 207 is provided with a first end 209 secured to a stationary support 211. A second end 213 is secured to one end of a flexible cable 215 which is wrapped around free end 203 of plug 169 and has its other end (not shown) secured thereto. The force of spring 207 imparted to plug 169 through cable 215 serves to restore the original position of plug 169 after rotative displacement thereof by forces imposed on pulley 201 through flexible belt 205.

Fuel is fed to the interior of valve member 157 through a supply conduit 217 and axle 179. As shall later be described, conduit 217 may be either conduit 19 or conduit 97, depending upon the separator device being utilized. Thus, depending upon the relative positions of valve member 157 with respect to casing 155 and closure head 175 with respect to second slot 165, the amount of fuel passing from the interior of valve member 157 into cavity 167 is precisely metered in accordance with both engine speed and operator demand. Fuel metered by unit 153 is conducted away from cavity 167 through a conduit 219, the latter being either conduit 19 or conduit 97 as shall also be later described.

Referring now to FIG. 7, there is shown a separator 221 which comprises an alternative device for incorporation in fuel system 1 in substitution for previously described separator 20. Separator 221 includes a pair of fluid motors 223 and 225 which operate in tandem with each other for the purpose of producing a continuous source of light vapor fraction for carburetion into intake manifold 93 of the engine.

Motor 223 comprises a cylinder 227 within which a piston 229 is disposed for reciprocating movement in association with a piston rod 231. A seal 233 is provided at one end of cylinder 227 to prevent escape of fluids therefrom. An external seal 235 is provided for sealing and journaling the reciprocating movement of rod 231. The extension and the retraction of rod 231 with respect to cylinder 227 serves to sequentially activate a plurality of spaced limit switches 237, 239, 241 and 243. Switches 237 and 239 are maintained in normally closed positions when not contacted by rod 231. Switches 241 and 243 are maintained in normally open positions when not contacted by rod 231.

The upper end of cylinder 227 is provided with a positive pressure line 245 for introducing pressurized fluid, such as air pressure from pump 15 or a similar source, into cylinder 227. A solenoid valve 247 is disposed in line 245 for controlling fluid flow therethrough into cylinder 227. A negative pressure line 249 is provided for supplying vacuum pressure, such as from intake manifold 93 or a similar source, into cylinder 227. A solenoid valve 251 controls pressure supplied through line 249.

At the lower portion of cylinder 227 is disposed a transducer 253 for generating ultrasonic energy within cylinder 227. Transducer 253 is operated off of main power supply 103. First container 3 supplies fuel to the interior of cylinder 227 through a supply conduit 255. A heater 257, which may be of the resistance type or heat exchange variety receiving hot fluids from the engine exhaust manifold, may be disposed in conduit 255 for preheating fuel prior to its introduction into cylinder 227. A solenoid valve 259 controls the flow of fuel into cylinder 227 through conduit 255. Lighter vapor fractions generated by motor 223 are passed out of cylinder 227 through a light fraction conduit 261, through a solenoid valve 263 disposed therein, through a switching valve 265 and finally through conduit 97 to previously indicated carburetor 87. A fuel metering device 269 disposed in conduit 97 controls the amount of light vapor fractions being carbureted into the engine in direct response to operator demand and engine speed. Metering device 269 may be either electronic fuel metering unit 31 or mechanical fuel metering unit 153. Switching valve 265 is preferably a spool valve having a reciprocating valve member permitting alternate fluid flow through conduit 97 from two sources. The heavy liquid fractions produced by motor 223 are passed out a conduit 271 into drain 63 for storage in previously indicated second container 61. A solenoid valve 275 is disposed in conduit 271 for controlling the flow of heavier fractions therethrough.

As shown in FIG. 7, motor 225 is in fluid communication with motor 223 and includes the same components as the latter. A piston (not shown) is also disposed in a cylinder 277 of motor 225 and includes an associated piston rod 279. Motor 221 also includes a plurality of limit switches 281, 283, 285 and 287 which function in the exact same manner as previously described switches 237—243 associated with motor 223. Rod 279 also includes a journal seal 289. Similarly, motor 225 is provided with a positive pressure line 291 with a solenoid valve 293 disposed therein, and a negative pressure line 295 having a corresponding solenoid valve 297 disposed therein.

Fuel is also supplied to cylinder 225 from container 3 through common conduit 255. As in the case of motor 223, conduit 255 feeding fuel motor 225 may also include a heater 299 and solenoid valve 301 for the same corresponding purposes. A transducer 303 is disposed at the lower portion of cylinder 227 for generating ultrasonic energy therein, with transducer 303 also being operated off of power supply 81. Light vapor fractions produced by motor 225 are sent to regulator valve 265 through a conduit 305 having a solenoid valve 307 disposed therein. Heavier liquid fractions produced by motor 225 are sent to drain 63 through a conduit 309 having a solenoid valve 311 disposed therein.

The operation of separator 221 shall be described with reference to motor 223 only since it is understood that the structural and functional features of motors 223 and 225 are exactly the same with the exception that they operate in opposite and tandem relationship to each other in order to produce a continuous flow of lighter fraction hydrocarbons through conduit 97 to carburetor 87.

When rod 231 is in its fully retracted position within cylinder 227 and makes no contact with switches 237243, the interior of cylinder 227 is substantially devoid of any fuel or separated fractions thereof. In this position of rod 231, valve 247 closes off positive pressure line 245 and valve 251 is open to permit application of negative pressure through line 249 to the interior of cylinder 227. Valve 259 is open to permit fuel from container 3 to flow into cylinder 227 through conduit 255. Further, valves 263 and 275 are closed to prevent fluid flow through their respective conduits 261 and 271. Vacuum applied through line 249 from intake manifold 93 by the operation of the engine serves to raise piston 229 and associated rod 231, thereby initiating the upstroke movement of motor 223. When rod 231 successively contacts normally closed switches 237 and 239, no valves are actuated and fuel is brought into cylinder 227 through conduit 255. Heater 257, if present in conduit 255, is automatically actuated at this time. When rod 231 next contacts switch 241, valve 259 is closed, thereby terminating flow of fuel into cylinder 227, and transducer 253 is activated to impart ultrasonic energy to the fuel contained within cylinder 227. Continued movement of rod 231 causes it to contact final switch 243 which closes off valve 251 and negative pressure supply through line 249. At this point, valve 247 is opened to admit positive pressure from line 245 into cylinder 227 and valve 263 is opened to permit light vapor fractions to flow out of cylinder 227 and through conduit 261.

Transducer 253 is also deactivated when contact is made on switch 243 by rod 231. When rod 231 has reached this maximum upstroke position, it then begins its downstroke moyement by virtue of positive pressure being applied to piston 229 from line 245. When rod 231 passes and closes normally opened switches 241 and 243, there is no valve actuation. However, when rod 231 passes and opens normally closed switch 239, valve 263 is closed for terminating flow of light vapor fractions through conduit 261. Simultaneously, valve 275 is opened to permit the heavier liquid fractions produced by motor 223 to flow through conduit 271 and out drain 63. In this position of rod 231, the reciprocating valve member in regulator valve 265 shifts to close off line 261, thereby permitting light vapor fractions from cylinder 277 to pass into conduit 97 from conduit 305 of motor 225.

It is therefore apparent that when rod 231 of motor 223 is moving towards its extended upstroke position rod 279 of motor 225 is moving towards its retracted downstroke position. By virtue of switching valve 265, the symbiotic tandem and opposite operations of motors 223 and 225 are coordinated to permit a substantially continuous flow of light vapor fraction hydrocarbons through conduit 97, metering unit 269 and into carburetor 87.

As shown in FIG. 1, fuel system 1 of the present invention is depicted in conjunction with the internal combustion engine of a vehicle and, in this capacity serves to modify and utilize the fuel supply normally carried by the vehicle for its operation. Moreover, the embodiment of system 1 utilizes the separator 20 of FIG. 3, which employs heat from the exhaust manifold of the engine to effect fractionation of the fuel into lighter vapor and heavier liquid fractions. When separator 20 is utilized in system 1, either electronic fuel metering unit 31 may be incorporated in conduit 19 as shown in FIG. 1 or, alternatively, mechanical fuel metering unit 153 depicted in FIG. 5 may be utilized in place of valve 29 in conduit 19 as a substitute for unit 31. It is therefore apparent that when separator 20 is being utilized, either electronic unit 31 or its mechanical analog unit 153 is disposed upstream of separator 20 to meter unfractionated fuel received from container 3 through conduit 19.

However, when separator 221 depicted in FIG. 7 and utilizing ultrasonic energy is employed in system 1, metering units 31 or 153 may alternatively be utilized in conjunction therewith by disposing the desired unit in conduit 97 for unit 269 as previously indicated in the description of FIG. 7. In this situation, unit 31 or unit 153 is disposed downstream from separator 221 and serves to meter light vapor fraction hydrocarbons directly into carburetor 87. When separator 221 is utilized, nozzle 99 is not necessary since starting of the engine can be effected from light vapor fractions produced by separator 221.

Mode of Operation

For the purpose of describing the basic mode of operation of a fuel system according to the present invention, reference shall now be made to fuel system 1 as it is depicted in FIG. 1. In starting the engine, current from a standard ignition activates thermostatic control unit 25 which senses the internal temperature of separator 20 through thermal sensors 53 and 55. Since the temperature is low, unit 25 opens solenoid valve 111, thereby permitting fuel from container 3 to be sent to fogging nozzle 99 through conduit 107. Secondary power supply 103 is activated and serves to operate the ultrasonic unit associated with nozzle 99 so that fuel may be sprayed as fine droplets into throat 91 of carburetor 87. This serves to start the engine which in turn circulates its hot exhaust gases through separator 20 by way of conduits 45 and 47. When a predetermined critical temperature is reached in separator 20, control unit 25 opens valve 23 and fuel from container 3 is sent through conduit 19 to separator 20. The latter fractionates the fuel and sends light vapor fractions to venturi 95 of carburetor 87 to supplement fuel droplets produced by nozzle 99. Capacitor 117 then shuts off the operation of nozzle 99 by closing valve 111 and detaching power supply 103. The engine then continues to operate from light vapor fractions fed into carburetor 87 through conduit 97.

When operator demand increases and the throttle plate of the engine opens, electronic metering unit 31 sends increased current to variable solenoid valve 29 to increase flow of fuel therethrough to separator 20 which in turn provides carburetor 87 with a greater amount of light vapor fractions. Unit 31 provides supporting current to permit minimal fuel to be injected in carburetor 87, thereby permitting the engine ignition to occur at any speed. Unit 31 also provides supplementary current to permit additional fuel to be injected in the engine to allow momentary enrichment of the air-to-fuel mixture up to the maximum fuel for maximum power at any given engine speed, though always maintaining a lean fuel mixture or higher than stoichiometric air-to-fuel ratio. Unit 31 further provides the supplementary current at a rate proportional to the degree operator demand exceeds engine speed at any given time or speed; operator demand being imposed directly through accelerator actuation.

Separator 20 operates at a control temperature of preferably between about 163—190°C (325°—375°F) if gasoline is the fuel supply being utilized. The heavy oily hydrocarbon fractions in liquid form are drained from separator 20 through conduit 63 into second container 61 for storage. In the event that container 61 is filled to maximum capacity, float indicator 69 actuates switching unit 73 which in turn cuts off power supply 81 from system 1, thereby terminating the operation of system 1 in the same manner as switching off the ignition of the vehicle.

As a safety measure, in the event of misfire due to the high volatility of the light vapor fractions being carbureted into intake manifold 93, the back pressure of such misfire serves to contact impact members 124 disposed in throat 91 of carburetor 87. This pivots closure plate 121 upwardly against abutments 125 and immediately directs the misfire gases out vent 119, while simultaneously preventing additional passage of light vapor fractions into manifold 93.

It is anticipated that new and different forms of fuel, including synthetic fuels, may be utilized for operating internal combustion engines. Such fuels may be extremely explosive in nature and will require the inclusion of burning inhibitors in order to accommodate safe transportation to locations of use. The present invention encompasses the removal of such burning inhibitors at the engine to any degree required to render the explosive fuel available for operation of the engine.

## Claims

1. A method of operating an internal combustion engine utilizing a liquid hydrocarbon fuel, such as gasoline, which is capable of being combusted by the internal combustion engine and which comprises approximately two-thirds light fuel fraction and one-third heavy fuel fraction by volume, characterized by separating the hydrocarbon fuel by vaporizing the light fuel fraction into a light vapor fraction substantially in the absence of air to prevent liquid phase oxidation of the hydrocarbon fuel and maintaining the light fuel fraction in vapor form; carbureting substantially only the light vapor fraction into the internal combustion engine and operating same at a higher than stoichiometric air-to-fuel ratio which varies in response to engine speed and operator demand under all operating conditions, and isolating substantially only the heavy fuel fraction.

2. The method of Claim 1 wherein:

a) hydrocarbon fuel is stored within a first container (3), and

b) the heavy liquid fraction is isolated by storing same within a second container (61).

3. The method of Claim 2 further including the step of subjecting the fuel contained within the first container (3) to a pressure above atmospheric pressure.

4. The method of any of Claims 1 to 3 wherein the hydrocarbon fuel comprises gasoline.

5. The method of any of Claims 1 to 4 wherein the separating is achieved by heating the hydrocarbon fuel.

6. The method of Claim 5 wherein the heating is conducted at a temperature range of between approximately 150 200°C.

7. The method of any of Claims 1 to 4 wherein the separating is achieved by applying ultrasonic energy to the hydrocarbon fuel.

8. The method of Claim 7 further including the step of preheating the hydrocarbon fuel prior to the application of ultrasonic energy thereto.

9. The method of any of Claims 1 to 8 wherein varying the air-to-fuel ratio comprises regulating the flow of light vapor fraction to the carburetor in accordance with engine speed and operator demand.

10. The method of any of Claims 1 to 9 further comprising the step of mixing air with the light vapor fractions subsequent to its separation from the hydrocarbon fuel and prior to carbureting same into the internal combustion engine.

11. A fuel system for utilizing a liquid hydrocarbon fuel such as gasoline in the operation of an internal combustion engine, wherein the fuel comprises approximately two-thirds light fuel fraction and one-third heavy fuel fraction by volume, the system comprising:

a first container (3) for storing the hydrocarbon fuel; means (20, 221) for separating the fuel; and a second container (61) for storing a fraction of the fuel, characterized by said separating means (20, 221) being arranged such that the light fuel fraction is vaporized into a light vapor fraction substantially in the absence of air to prevent liquid phase oxidation of the hydrocarbon fuel and maintaining the light fuel fraction in vapor form while the heavy fuel fraction is collected in the second container (61); by a carburator (87) injecting a fuel mixture comprising substantially only the light vapor fraction and air into the engine for operating same; and by means (31, 153, 269) for regulating the flow of light vapor fraction to the carburetor (87) wherein the air-to-fuel ratio is permitted to vary in accordance with engine speed and operator demand while maintaining the higher than stoichiometric air-to-fuel ratio under all operating conditions.

12. The system of Claim 11 wherein said separating means includes (127, 257, 299) for heating the hydrocarbon fuel.

13. The system of Claim 12 wherein the heating means include:

a) a casing (129) for receiving hydrocarbon fuel from the first container (3);

b) a jacket (127) surrounding the casing (129) and defining an annular chamber (131) therewith; and

c) means (45, 47, 49) for circulating a fluid heating medium through the annular chamber (131).

14. The system of Claim 13 wherein the heating medium comprises gaseous products of combustion derived from the operation of the engine.

15. The system of Claim 13 wherein the circulating means includes:

a) an intake conduit (45) for introducing the heating medium into the annular chamber (131);

b) an output conduit (47) for removing the heating medium from the annular chamber (131);

c) a valve (49) for controlling heating medium flow through the intake and output conduits (45, 47);

d) means (53, 55) for sensing the temperature of the casing interior; and

e) thermostatic control means (73) for actuating the valve (49) in response to the sensing means (53, 55) when the temperature of the casing interior reaches a predetermined value.

16. The system of Claim 11 wherein the separating means includes means (223, 225, 253, 303) for applying ultrasonic energy to the hydrocarbon fuel.

17. The system of Claim 16 further including means (257) for preheating the hydrocarbon fuel.

18. The system of Claim 16 wherein the ultrasonic energy applying means includes:

a) a first fluid-operated motor (223) for receiving hydrocarbon fuel;

b) a first ultrasonic energy generating transducer (253) carried by the first motor (223);

c) a second fluid-operated motor (225) for receiving hydrocarbon fuel;

d) a second ultrasonic energy generating transducer (303) carried by the second motor (225); and

e) means (255) for supplying fluid pressure to the first and second motors (223, 225) to operate same in tandem with each other to produce a substantially continuous source of light vapor fraction.

19. The system of Claim 18 wherein:

a) each motor (223, 225) includes a cylinder (227) and a piston (229) disposed within the cylinder for movement between an upstroke position and a downstroke position; and

b) the fluid pressure supply means includes:

i. a source of positive pressure for moving the piston (229) towards the downstroke position, and

ii. a source of negative pressure for moving the piston (229) towards its upstroke position.

20. The system of Claim 19 further including means (263, 275, 307, 311, 237—243, 281—287) for controlling the flow of light vapor fraction produced by the tandem operation of the first and second motors to the regulating means.

21. The system of Claim 19 or 20 wherein:

a) each piston (229) includes an associated rod (231) for extension from and retraction within the cylinder (227) during the movement of the piston (229) between the upstroke and downstroke positions; and

b) the means for controlling the flow of light vapor fraction includes:

i. a first set (259, 263, 275) of switchoperated valves for sequential actuation by the rod (231) of the first motor (223), and

ii. a second set (301, 307, 311) of switchoperated valves for sequential actuation by the rod (231) of the second motor (225).

22. The system of Claim 11 wherein the regulating means includes:

a) an elongate casing (155) having a bore (156) disposed along the longitudinal axis thereof; and

b) a tubular valve member (157) rotatably received within the bore (156) and defining an annular chamber (167) therewith, said valve member (157) including spaced first and second slots (163, 165) formed in the wall thereof for providing communication between the interior of the valve member (157) and the annular chamber (167); and

c) a rotatable plug (169) disposed within the valve member for varying the degree of communication between the interior of the valve member (157) and the annular chamber (167) through the second slot (165).

23. The system of Claim 22 further including:

a) means (187, 177) for rotating the valve member (157) in direct proportion to engine speed; and

b) means (201-215) for rotating the plug (169) in direct proportion to operator demand.

24. The system of Claim 23 further including:

a) an inlet (217) for admitting fluid into the interior of the valve member (157); and

b) an outlet (219) for removing fluid from the annular chamber.

25. The system of Claim 22 wherein:

a) the first and second slots (163, 165) each extend for approximately 180° around the wall of the valve member (157);

b) the annular chamber (167) has a substantially semicylindrical cross-sectional configuration; and

c) the degree of communication between the interior of the valve member (157) and the annular chamber through the first and second slots (163, 165) may be simultaneously varied by rotating the valve member (157) within the bore (156).

26. The system of Claim 11 wherein the regulating means includes:

a) a variable capacity solenoid valve for varying the flow of light vapor fraction to the carburetor (87);

b) means (37) for providing a first electrical signal in proportion to engine speed;

c) means (43) for providing a second electrical signal in proportion to operator demand;

d) a first circuit for providing a first electrical output for operating the solenoid valve;

e) a first means (149) for amplifying any difference between the first and second electrical signals;

f) a second circuit for providing a second electrical output in proportion to the amplified signal difference; and

g) a second means (147) for summing and amplifying the first and second electrical outputs to produce a third electrical output in proportion thereto for operating the solenoid valve.

27. The system of Claim 26 wherein the means for providing the first electrical signal includes a tachometer (137).

28. The system of Claim 26 wherein the means for providing the second electrical signal includes a potentiometer (143).

29. The system of Claim 11 wherein the carburetor includes:

a) a throat (91);

b) a valve (121—125) disposed within the throat (91) for closing off the passageway defined thereby in response to fluid back pressure produced by combustion of the fuel mixture.

30. The system of Claim 29 wherein the valve includes:

a) a pivotal plate (121);

b) an abutment (125) carried by the throat (91) for limiting the pivotal movement of the plate (121); and

c) means (124) carried by the plate for contact by the fluid back pressure to pivot the plate (121) and cause agitative mixing of the fuel mixture during operation of the engine.

31. The system of Claim 29 wherein the throat (91) further includes means (119) for venting the fluid back pressure when the passageway is closed off by the valve.

32. The system of Claim 11 wherein the carburetor includes an injection means (99—111) for initiating the operation of the engine.

33. The system of Claim 32 wherein the injection means includes:

a) a nozzle (99) for receiving hydrocarbon fuel from the first container (3) and spraying same into the engine;

b) means carried by the nozzle for applying ultrasonic energy to the fuel being sprayed; and

c) means (111) for controlling the flow of fuel to the nozzle.

34. The system of Claim 11 wherein the separator further includes means (57, 59) for mixing the light vapor fraction with air subsequent to its separation from the hydrocarbon fuel.

**Patentansprüche**

1. Verfahren zum Betreiben eines Brennkraftmotors mit innerer Verbrennung unter Verwendung eines Kohlenwasserstoff-Kraftstoffs, zum Beispiel Benzin, der durch den Brennkraftmotor mit innerer Verbrennung verbrennbar ist, und der annähernd zwei Drittel leichten Kraftstoff-Volumenanteil und ein Drittel schweren Kraftstoff-Volumenanteil enthält, gekennzeichnet durch Separieren des Kohlenwasserstoff-Kraftstoffs durch Verdampfen des leichten Kraftstoff-Anteils in einen leichten Dampf-Anteil unter praktischem Fehlen von Luft, um eine Flüssigphasenoxidation des Kohlenwasserstoff-Kraftstoffs zu verhindern, und Aufrechterhalten des leichten Kraftstoff-Anteils in Form von Dampf;

Carburieren im wesentlichen nur des leichten Dampf-Anteils in den Brennkraftmotor mit innerer Verbrennung und Betreiben desselben bei einem höheren als dem stöchiometrischen Luft-Kraftstoff-Verhältnis, welches bei sämmtlichen Betriebsbedingungen in Abhängigkeit der Motordrehzahl und des betreiberseitigen Bedarfs variiert, und Isolieren im wesentlichen lediglich des schweren Kraftstoff-Anteils.

2. Verfahren nach Anspruch 1, bei dem:

a) Kohlenwasserstoff-Kraftstoff in einem ersten Behälter (3) gespeichert ist, und

b) der schwere flüssige Anteil dadurch getrennt wird, daß er innerhalb eines zweiten Behälters (61) gespeichert wird.

3. Verfahren nach Anspruch 2, zusätzlich beinhaltend den Schritt, den in dem ersten Behälter (3) enthaltenen Kraftstoff einem Druck oberhalb des atmosphärischen Drucks auszusetzen.

4. Verfahren nach einem der Ansprüche 1 bis 3, bei dem der Kohlenwasserstoff-Kraftstoff Benzin aufweist.

5. Verfahren nach einem der Ansprüche 1 bis 4, bei dem das Separieren durch Erhitzen des Kohlenwasserstoff-Kraftstoffs erreicht wird.

6. Verfahren nach Anspruch 5, bei dem das Erhizen bei einem Temperaturbereich zwischen annähernd 150—200° C durchgeführt wird.

7. Verfahren nach einem der Ansprüche 1 bis 4, bei dem das Separieren erreicht wird, indem auf den Kohlenwasserstoff-Kraftstoff Ultraschallenergie aufgebracht wird.

8. Verfahren nach Anspruch 7, weiterhin beinhaltend den Schritt, vor dem Aufbringen der Ultraschallenergie den Kohlenwasserstoff-Kraftstoff vorzuheizen.

9. Verfahen nach einem der Ansprüche 1 bis 8, bei dem das Variieren des Luft-Kraftstoff-Verhältnisses das Regulieren des Stroms des leichten Dampf-Anteils zu dem Vergaser nach Maßgabe der Motordrehzahl und des bedienerseitigen Bedarfs beinhaltet.

10. Verfahren nach einen der Ansprüche 1 bis 9, weiterhin umfassend den Schritt, Luft mit den leichten Dampf-Anteilen im Anschluß an dessen Separierung von dem Kohlenwasserstoff-Kraftstoff und vor dessen Carburieren in den Brennkraftmotor mit innerer Verbrennung zu mischen.

11. Kraftstoffsystem zur Verwendung eines flüssigen Kohlenwasserstoff-Kraftstoffs, wie Benzin, beim Betrieb eines Brennkraftmotors mit innerer Verbrennung, bei dem der Kraftstoff annähernd zwei Drittel leichten Kraftstoff-Volumenanteil und ein Drittel schweren Kraftstoff-Volumenanteil enthält, umfassend:

einen ersten Behälter (3) zum Speichern des Kohlenwasserstoff-Kraftstoffs;

eine Einrichtung (20, 121) zum Separieren des Kraftstoffs;

einen zweiten Behälter (61) zum Speichern eines Anteils des Kraftstoffs, gekennzeichnet durch eine Separiereinrichtung (20, 221), die derart ausgebildet ist, daß der leichte Kraftstoff-Anteil verdampft wird zu einem leichten Dampf-Anteil bei praktischer Abwesenheit von Luft, um eine Flüssigphasenoxidation des Kohlenwasserstoff-Kraftstoffs zu verhindern, und Erhalten des leichten Kraftstoff-Anteils in Form von Dampf, während der schwere Kraftstoff-Anteil in dem zweiten Behälter (61) gesammelt wird,

durch einen Carburator (87), der in den Motor, um diesen zu betreiben, ein Kraftstoffgemisch einspriizt, daß im wesentliche lediglich den leichten Dampf-Anteil sowie Luft enhält; und

eine Einrichtung (31, 153, 269) zum Regulieren des Stroms des leichten Dampf-Anteils zu dem Carburator (87), wobei das Luft-Kraftstoff-Verhältnis bei sämtlichen Betriebsbedingungen nach Maßgabe der Motordrehzahl und des bedienerseitigen Bedarfs variiert gelassen wird, während das höhere als stöchiometrische Luft-Kraftstoff-Verhältnis aufrechterhalten wird.

12. System nach Anspruch 11, bei dem die Separiereinrichtung eine Einrichtung (127, 227, 257, 299) zum Erhizen des Kohlenwasserstoff-Kraftstoffs enthält.

13. System nach Anspruch 12, bei dem die Heizeinrichtung enthält:

a) ein Gehäuse (129) zur Aufnahme von Kohlenwasserstoff-Kraftstoff aus dem ersten Behälter (3);

b) eine Hülle (127), die das Gehäuse (129) umgibt und mit disem eine ringförmige Kammer (131) definiert; und

c) eine Einrichtung (45, 47, 49) zum Zirkulieren eines Fluid-Aufheizmediums durch die Ringkammer (131).

14. System nach Anspruch 13, bei dem das Heizmedium gasförmige Verbrennungsprodukte enhält, die vom Betrieb des Motors abgeleitet sind.

15. System nach Anspruch 13, bei dem die Zirkuliereinrichtung enthält:

a) einen Einlaßkanal (45) zum Einleiten des Heizmediums in die ringförmige Kammer (131);

b) einen Ausgangskanal (47) zum Ableiten des Heizmediums aus der ringförmigen Kammer (131);

c) ein Ventil (49) zum Steuern des Heizmedium-Stroms durch den Einlaß- und den Auslaßkanal (45, 47);

d) eine Einrichtung (53, 55) zum Fühlen der Temperatur im Inneren des Gehäuses; und

i) eine termostatische Steuereinrichtung (73) zum Betätigen des Ventils (49) in Abhängigkeit der Fühleinrichtung (53, 55), wenn die Temperatur im Inneren des Gehäuses einen vorbestimmten Wert erreicht.

16. System nach Anpruch 11, bei dem die Separiereinrichtung eine Einrichtung (223, 225, 253, 303) zum Beaufschlagen des Kohlenwasserstoff-Kraftstoffs mit Ultraschallenergie enthält.

17. System nach Anspruch 16, weiterhin enthaltend eine Einrichtung (257) zum Vorheizen des Kohlenwasserstoff-Kraftstoffs.

18. System nach Anpruch 16, bei dem die Einrichtung zum Beaufschlagen mit Ultraschallenergie enthält:

a) einen ersten fluidbetätgten Motor (223), der Kohlenwasserstoff-Kraftstoff empfängt;

b) einen ersten Ultraschallenergie erzeugenden Wandler (253), der von dem ersten Motor (223) getragen wird;

c) einen zweiten fluidbetätigten Motor (225), der Kohlenwasserstoff-Kraftstoff empfängt;

d) einen zweiten Ultraschallenergie erzeugenden Wandler (303), der von dem zweiten Motor (225) getragen wird; und

e) eine Einrichtung (255) zum Speisen des ersten und des zweiten Motors (223, 225) mit Fluiddruck, um die Motoren im Tandembetrieb miteinander zu betreiben und eine im wesentlichen kontinuierliche Quelle für leichten Dampf-Anteil zu erzeugen.

19. System nach Anspruch 18, bei dem:

a) jeder Motor (223, 225) einen Zylinder (227) und einen in dem Zylinder befindlichen Kolben (229) für eine Bewegung zwischen einer Aufwärtshub-Position und einer Abwärtshub-Position enthält; und

b) die Fluiddruck-Speiseeinrichtung enthält:

i. eine Überdruckquelle zum Bewegen des Kolbens (229) in Richtung auf die Abwertshub-Position,

ii. eine Unterdruckquelle zum Bewegen des Kolbens (229) in Richtung auf dessen Aufwärtshub-Position.

20. System nach Anspruch 15, weiterhin umfaßend eine Einrichtung (263, 275, 307, 227—243, 281—287) zum Steuern des Stroms des leichen Dampf-Anteils, der von dem Tandembetrieb des ersten und des zweiten Motors erzeugt wird, mit Hilfe der Reguliereinrichtung.

21. System nach Anspruch 19 oder 20, bei dem:

a) jeder Kolben (229) eine zugehörige Stange (231) zum Ausfahren aus und zum Zurückziehen in den Zylinder (227) während der Bewegung des Kolbens (229) zwischen der Aufwärtshub- und der Abwärtshub-Position enthält; und

b) die Einrichtung zum Steuern des Stroms des leichten Dampf-Anteils enthält:

i. einen ersten Satz (259, 263, 275) von schaltbetätigten Ventilen für die sequentielle Betätigung der Stange (231) des ersten Motors (223), und

ii. einen zweiten Satz (301, 307, 311) von schaltbetätigten Ventilen für die sequentielle Betätigung durch die Stange (231) des zweiten Motors (225).

22. System nach Anspruch 11, bei dem die Reguliereinrichtung aufweist.

a) ein längliches Gehäuse (155) mit einer entlang seiner Längsachse verlaufenden Bohrung (156); und

b) ein rohrförmiges Ventilglied (157), das drehbar in der Bohrung (156) aufgenommen ist und mit dieser eine Ringkammer (167) definiert, wobei das Ventilglied (157) einen ersten und einen davon beabstandeten zweiten Schlitz (163, 165) aufweist, die in seiner Wand ausgebildet sind, um eine Verbindung zwischen dem Inneren des Ventilglieds (157) und der ringförmigen Kammer (167) zu schaffen; und

c) einen drehbaren Stopfen (169), der innerhalb des Ventilglieds angeordnet ist, um das Ausmaß der Verbindung zwischen dem Inneren des Ventilglieds (157) und der ringförmigen Kammer (167) über den zweiten Schlitz (165) zu variieren.

23. System nach Anspruch 22, weiterhin umfaßend:

a) eine Einrichtung (187, 177) zum Drehen des Ventilglieds (157) in direktem Verhältnis zur Motordrehzahl; und

b) eine Einrichtung (201—215) zum Drehen des Stopfens (169) in direktem Verhältnis zu dem benutzerseitigen Bedarf.

24. System nach Anspruch 23, weiterhin enthaltend:

a) einen Einlaß (217) zum Einlassen von Fluid in das Innere des Ventilglieds (157); und

b) einen Auslaß (219) zum Entfernen von Fluid aus der ringförmigen Kammer.

25. System nach Anspruch 22, bei dem:

a) der erste und der zweite Schlitz (163, 165) sich jeweils über annähernd 180° um die Wand des Ventilglieds (157) erstrecken;

b) die ringförmige Kammer (167) eine etwa halbzylinrische Querschnittskonfiguration aufweist;

c) das Ausmaß der Verbindung zwischen dem Inneren des Ventilglieds (157) und der ringförmigen Kammer über den ersten und den zweiten Schlitz (163, 165) gleichzeitig variiert werden können durch Drehen des Ventilglieds (157) innerhalb der Bohrung (165).

26. System nach Anspruch 11, bei dem die Reguliereinrichtung enthält:

a) ein eine veränderliche Kapazität aufweisendes Solenoidventil zum Variieren des Stroms des leichten Dampf-Anteils zu dem Carburator (87);

b) eine Einrichtung (37) zum Erzeugen eines ersten elektrischen Signals im Verhältnis zur Motordrehzahl;

c) eine Einrichtung (43) zur Erzeugung eines zweiten elektrischen Signals im Verhältnis zum benutzerseitigen Bedarf;

d) eine erste Schaltung zum Erzeugen eines ersten elektrischen Ausgangssignals zum Betätigen des Solinoidventils;

e) eine erste Einrichtung (149) zum Verstärken jeglicher Differenz zwischen dem ersten und dem zweiten elektrischen Signal;

f) eine zweite Schaltung zum Erzeugen eines zweiten elektrischen Ausgangssignals im Verhaltnis zu der verstärkten Signaldifferenz; und

g) eine zweite Einrichtung (147) zum Summieren und Verstärken des ersten und des zweiten elektrischen Ausgangssignals, um im Verhältnis dazu ein drittes elektrisches Ausgangssignal zum Betätigen des Solenoidventils zu erzeugen.

27. System nach Anspruch 26, bei dem die Einrichtung zum Erzeugen des elektrischen Signals einen Tachometer (137) enthält.

28. System nach Anspruch 26, bei dem die Einrichtung zum Erzeugen des zweiten elektrischen Signals ein Potentiometer (143) enthält.

29. System nach Anspruch 11, bei dem der Carburator enthält:

a) einen Hals (91);

b) ein in dem Hals (91) befindliches Ventil (121, 125) zum Absperren des durch den Hals definierten Durchgangs in Abhängigkeit des Fluid-Rückdrucks, der durch die Verbrennung des Kraftstoffgemisches erzeugt wird.

30. System nach Anspruch 29, bei dem das Ventil enthält:

a) ein schwenkbare Platte (121);

b) einen Anschlag (125), der von dem Hals (91) getragen wird, um die Schwenkbewegung der Platte (121) zu begrenzen; und

c) eine von der Platte getragene Einrichtung (124) für die Berührung durch den Fluid-Rückdruck, um die Platte (121) zu verschwenken und eine durchrührende Mischung des Kraftstoff-Gemisches während des Betriebs des Motors zu veranlassen.

31. System nach Anspruch 29, bei dem der Hals (91) weiterhin eine Einrichtung (119) zum Abführen des Fluid-Rückdrucks bei von dem Ventil gesperrten Durchgang enthält.

32. System nach Anspruch 11, bei dem der Carburator eine Einspritzeinrichtung (99—111) zum Einleiten des Motorbetriebs enthält.

33. System nach Anspruch 32, bei dem die Einspritzeinrichtung enthält:

a) eine Düse (99), die Kohlenwasserstoff-Kraftstoff von dem ersten Behälter (3) empfängt und diesen in den Motor einsprüht;

b) eine von der Düse getragene Einrichtung zum Beaufschlagen des gesprühten Kraftstoffs mit Ultraschallenergie; und

c) eine Einrichtung (111) zum Steuern des Kraftstoffstroms zu der Düse.

34. System nach Anspruch 11, bei dem der Separator weiterhin eine Einrichtung (57, 59) zum Mischen des leichten Dampf-Anteils mit Luft anschließend an dessen Trennung von dem Kohlenwasserstoff-Kraftstoff aufweist.

## Revendications

1. Procédé de commande d'un moteur à combustion interne utilisant un carburant hydrocarboné liquide, tel que de l'essence, qui peut brûler dans le moteur à combustion interne et qui comporte environ deux tiers d'une fraction légère et un tiers d'une fraction lourde, en volume, caractérisé par

la séparation du carburant hydrocarboné par vaporisation de la fraction légère sous forme d'une fraction légère en phase vapeur, pratiquement en l'absence d'air, afin que l'oxydation en phase liquide du carburant hydrocarboné soit empêchée et que la fraction légère reste sous forme d'une vapeur,

la carburation de la seule fraction légère pratiquement en phase vapeur dans le moteur à combustion interne, et le fonctionnement de celui-ci avec un rapport air-carburant supérieur au rapport stoechiométrique, ce rapport variant avec la vitesse du moteur et la demande de l'opéra' teur dans toutes les conditions de fonctionnement, et

l'isolement de la seule fraction lourde du carburant pratiquement.

2. Procédé selon la revendication 1, dans lequel:

a) le carburant hydrocarboné est conservé dans un premier récipient (3), et

b) la fraction liquide lourde est isolée par stockage dans un second récipient (61).

3. Procédé selon la revendication 2, comprenant en outre l'étape d'application d'une pression supérieure à la pression atmosphérique au carburant contenu dans le premier récipient (3).

4. Procédé selon l'une quelconque des revendications 1 à 3, dans lequel le carburant hydrocarboné est l'essence.

5. Procédé selon l'une quelconque des revendications 1 à 4, dans lequel la séparation est réalisée par chauffage du carburant hydrocarboné.

6. Procédé selon la revendication 5, dans lequel le chauffage est réalisé dans une plage de températures comprise entre environ 150 et 200 °C.

7. Procédé selon l'une quelconque des revendications 1 à 4, dans lequel la séparation est réalisée par application d'énergie ultrasonore au carburant hydrocarboné.

8. Procédé selon la revendication 7, comprenant en outre l'étape de préchauffage du carburant hydrocarboné avant l'application d'énergie ultrasonore.

9. Procédé selon l'une quelconque des revendications 1 à 8, dans lequel la variation du rapport air-carburant comprend la régulation du débit de la fraction légère en phase vapeur transmise au carburateur en fonction de la vitesse du moteur et de la demande de l'opérateur.

10. Procédé selon l'une quelconque des revendications 1 à 9, comprenant en outre l'étape de mélange d'air aux fractions légères en phase vapeur après séparation du carburant hydrocarboné et avant carburation dans le moteur à combustion interne.

11. Circuit de carburant destiné à utiliser un carburant hydrocarboné liquide, par exemple de l'essence, lors du fonctionnement du moteur à combustion interne, dans lequel le carburant comprend environ les deux tiers d'une fraction légère et un tiers d'une fraction lourde, en volume, le circuit comprenant:

un premier récipient (3) destiné à stocker le carbu'rant hydrocarboné,

un dispositif (20, 221) de séparation du carburant, et

un second récipient (61) destiné à stocker une fraction du carburant,

caractérisé en ce que le dispositif de séparation (20, 221) est disposé de manière que la fraction légère se vaporise sous forme d'une fraction légère en phase vapeur pratiquement en l'absence d'air afin que l'oxydation de la phase liquide du carburant hydrocarboné soit évitée et que la fraction légère reste sous forme vapeur pendant que la fraction lourde du carburant est collectée dans le second récipient (61),

par la présence d'un carburateur (87) destiné à injecter un mélange combustible contenant pratiquement la seule fraction légère en phase vapeur et de l'air, dans le moteur afin que celui-ci fonctionne, et

par un dispositif (31, 153, 269) destiné à réguler le débit de fraction légère en phase vapeur transmis au carburateur (87), le rapport air-carburant pouvant varier d'après la vitesse du moteur et la demande de l'opérateur, avec maintien du rapport air-carburant à une valeur supérieure à la valeur stoechiométrique dans toutes les conditions de fonctionnement.

12. Circuit selon la revendication 11, dans lequel le dispositif de séparation comporte un dispositif (127, 257, 299) de chauffage du carburant hydrocarboné.

13. Circuit selon la revendication 12, dans lequel le dispositif de chauffage comporte

a) un carter (129) destiné à recevoir le carburant hydrocarboné du premier récipient (3),

b) une double enveloppe (127) formée autour du carter (129) et délimitant une chambre annulaire (131) avec lui, et

c) un dispositif (45, 47, 49) destiné à faire circuler un fluide de chauffage dans la chambre annulaire (131).

14. Circuit selon la revendication 13, dans lequel le fluide de chauffage est constitué par les produits gazeux de combustion obtenus par fonctionnement du moteur.

15. Circuit selon la revendication 13, dans lequel le dispositif de circulation comporte:

a) un conduit d'admission (45) destiné à introduire le fluide de chauffage dans la chambre annulaire (131),

b) un conduit de sortie (47) destiné à extraire le fluide de chauffage de la chambre annulaire (131),

c) une électrovanne (49) destinée à régler le débit de fluide de chauffage dans les conduits d'admission et de sortie (45, 47),

d) un dispositif (53, 55) de détection de la température de l'intérieur du carter, et

e) un dispositif thermostatique de commande (73) destiné à manoeuvrer l'électrovanne (49) en fonction du dispositif de détection (53, 55) lorsque la température de l'intérieur du carter atteint une valeur prédéterminée.

16. Circuit selon la revendication 11, dans lequel le dispositif de séparation comporte un dispositif (223, 225, 253, 303) destiné à appliquer de l'énergie ultrasonore au carburant hydrocarboné.

17. Circuit selon la revendication 16, comprenant en outre un dispositif (257) de préchauffage du carburant hydrocarboné.

18. Circuit selon la revendication 16, dans lequel le dispositif d'application d'énergie ultrasonore comporte:

a) un premier moteur (223) alimenté par un fluide et destiné à recevoir un carburant hydrocarboné,

b) un premier transducteur (253) générateur d'énergie ultrasonore et supporté par le premier moteur (223),

c) un second moteur (225) commandé par un fluide et destiné à recevoir du carburant hydrocarboné,

d) un second transducteur (303) générateur d'énergie ultrasonore et supporté par le second moteur (225), et

e) un dispositif (255) destiné à transmettre un fluide sous pression au premier et au second moteur (223, 225) afin que ceux-ci fonctionnent en tandem et transmettent la fraction légère en phase vapeur de manière pratiquement continue.

19. Circuit selon la revendication 18, dans lequel:

a) chaque moteur (223, 225) comporte un cylindre (227) et un piston (229) disposé dans le cylindre et destiné à se déplacer entre une position de fin de course ascendante et une position de fin de course descendante, et

b) le dispositif d'alimentation en fluide sous pression comporte

i. une source d'une pression destinée à déplacer le piston (229) vers sa position de fin de course descendante, et

ii. une source d'une dépression destinée à déplacer le piston (229) vers sa position de fin de course ascendante.

20. Circuit selon la revendication 19, comprenant en outre un dispositif (263, 275, 307, 311, 237—243, 281—287) destiné à régler le débit de fraction légère en phase vapeur produite par le fonctionnement en tandem du premier et du second moteur et transmise au dispositif de régulation.

21. Circuit selon la revendication 19 ou 20, dans lequel.

a) chaque piston (229) comporte une tige associée (231) destinée à sortir du cylindre (227) et à y pénétrer pendant le déplacement du piston (229) entre les positions de fin de course ascendante et de fin de course descendante, et

b) le dispositif de réglage du débit de la fraction légère en phase vapeur comprend:

i. un premier ensemble (259, 263, 275) d'électrovannes commandées par des commutateurs et destinées à être manoeuvrées successivement par la tige (231) du premier moteur (223), et

ii. un second ensemble (301, 307, 311) d'électrovan'nes commandées par des interrupteurs et destinées à être commandées successivement par la tige (231) du second moteur (225).

22. Circuit selon la revendication 11, dans lequel le dispositif de régulation comporte:

a) un carter allongé (155) ayant un alésage (156) disposé suivant son axe longitudinal, et

b) un obturateur tubulaire (157) logé dans l'alésage (156) afin qu'il puisse tourner et délimitant une chambre annulaire (167) avec lui, l'obturateur (157) ayant une première et une seconde fente distantes (163, 165) formées dans sa paroi et assurant la communication entre l'intérieur de l'obturateur (157) et la chambre annulaire (167), et

c) un bouchon rotatif (169) placé dans l'obturateur et destiné à faire varier le degré de communication entre l'intérieur de l'obturateur (157) et la chambre annulaire (167) par l'intermédiaire de la seconde fente (165).

23. Circuit selon la revendication 2, comprenant en outre:

a) un dispositif (187, 177) destiné à faire tourner l'obturateur (157) proportionnellement à la vitesse du moteur, et

b) un dispositif (201—215) destiné à faire tourner le bouchon (169) proportionnellement à la demande de l'opérateur.

24. Circuit selon la revendication 23, comportant en outre:

a) une entrée (217) de fluide à l'intérieur de l'obturateur (157), et

b) une sortie (219) de fluide de la chambre annulaire.

25. Circuit selon la revendication 22, dans lequel:

a) la première et la seconde fente (163, 165) sont disposées chacune sur 180° environ autour de la paroi de l'obturateur (157),

b) la chambre annulaire (167) a une configuration sensiblement hémicylindrique en coupe, et

c) le degré de communication entre l'intérieur de l'obturateur (157) et la chambre annulaire par l'intermédiaire de la première et de la seconde fente (163, 165) peut être modifié simultanément par rotation de l'obturateur (157) dans l'alésage (156).

26. Circuit selon la revendication 11, dans lequel le dispositif de régulation comporte:

a) une électrovanne à capacité variable destinée à faire varier le débit de la fraction légère en phase vapeur transmise au carburateur (87),

b) un dispositif (37) destiné à transmettre un premier signal électrique proportionnel à la vitesse du moteur,

c) un dispositif (43) destiné à transmettre un second signal électrique proportionnel à la demande de l'opérateur,

d) un premier circuit destiné à transmettre un premier signal électrique de sortie de commande de l'électrovanne,

e) un premier dispositif (149) d'amplification de la différence entre le premier et le second signal électrique,

f) un second circuit destiné à transmettre un second signal électrique de sortie proportionnel à la différence amplifiée entre les signaux, et

g) un second dispositif (147) destiné à ajouter et amplifier le premier et le second signal électrique de sortie afin qu'ils forment un troisième signal électrique de sortie qui leur est proportionnel et qui est destiné à la commande de l'électrovanne.

27. Circuit selon la revendication 26, dans lequel le dispositif destiné à transmettre le premier signal électrique comporte un tachymètre (137).

28. Circuit selon la revendication 26, dans lequel le dispositif destiné à transmettre le second signal électrique comporte un potentiomètre (143).

29. Circuit selon la revendication 11, dans lequel le carburateur comporte:

a) un col (91),

b) un obturateur (121—125) disposé dans le col (91) et destiné à fermer le passage délimité par celui-ci en présence d'une contre-pression du fluide, produite par combustion du mélange combustible.

30. Circuit selon la revendication 29, dans lequel l'obturateur comporte:

a) une plaque pivotante (121),

b) un organe de butée (125) porté par le col (91) et destiné à limiter le mouvement de pivotement de la plaque (121), et

c) un dispositif (124) supporté par la plaque afin qu'il soit au contact du fluide exerçant la contre-pression de manière que celle-ci fasse pivoter la plaque (121), et destiné à provoquer l'agitation du mélange combustible pendant le fonctionnement du moteur.

31. Circuit selon la revendication 29, dans lequel le col (91) comporte en outre un dispositif (119) destiné à évacuer la contre-pression exercée par le fluide lorsque le passage est fermé par l'obturateur.

32. Circuit selon la revendication 11, dans lequel le carburateur comporte un dispositif d'injection (99—101) destiné à lancer le fonctionnement du moteur.

33. Circuit selon la revendication 32, dans lequel le dispositif d'injection comporte:

a) une buse (99) destinée à recevoir le carburant hydrocarboné du premier récipient (3) et à le pulvériser dans le moteur,

b) un dispositif porté par la buse et destiné à appliquer de l'énergie ultrasonore au carburant en cours de pulvérisation, et

c) un dispositif (111) de réglage du débit de carburant transmis à la buse.

34. Circuit selon la revendication II, dans lequel le séparateur comporte en outre un dispositif (57, 59) destiné à mélanger la fraction légère en phase vapeur avec de l'air après sa séparation du carburant hydrocarboné.

FIG.1

FIG.2

1

FIG.3

FIG.4

FIG.5

FIG.6

FIG.7

POWER SUPPLY

FUEL SUPPLY